(19) Europäisches Patentamt
European Patent Office
Office européen des brevets

(11) **EP 4 269 086 A1**

(12) **EUROPEAN PATENT APPLICATION**

(43) Date of publication:
01.11.2023 Bulletin 2023/44

(21) Application number: 22170907.4

(22) Date of filing: 29.04.2022

(51) International Patent Classification (IPC):
*B32B 1/00* (2006.01)  *B32B 17/10* (2006.01)
*B62D 25/00* (2006.01)  *B32B 3/02* (2006.01)
*B60J 1/00* (2006.01)  *B61D 19/02* (2006.01)

(52) Cooperative Patent Classification (CPC):
B32B 1/00; B32B 3/02; B32B 7/12;
B32B 17/10036; B32B 17/1011; B32B 17/10266;
B32B 17/10348; B32B 17/10605; B32B 17/10651;
B32B 17/10761; B32B 17/1077; B32B 17/10788;
B32B 17/10889; B32B 17/10935; B32B 27/18;

(Cont.)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: AGP Worldwide Operations GmbH
6300 Zug (CH)

(72) Inventors:
• GERANTON, Guillaume
69006 Lyon (FR)

• LE NY, Jean Marie
4851 Gemmenich (BE)
• URIBE, Andrés
Lima (PE)
• VOELTZEL, Charles
Shelby Twp, Michigan, 48317 (US)

(74) Representative: ABG Intellectual Property Law, S.L.
Avenida de Burgos, 16D
Edificio Euromor
28036 Madrid (ES)

(54) **ROOF FOR A VEHICLE**

(57) A roof (300) for a vehicle having a safety cage (400), the roof (300) comprising a laminated glazing (200) having a length $L_g$, the laminated glazing (200) comprising:

at least two glass layers (201, 202); and

at least one plastic layer (4) for permanently bonding the at least two glass layers (201, 202) together;

wherein the at least two glass layers (201, 202) comprise at least one feature line (20), the feature line (20) having a cross section having at least two bends (41, 42, 43, 44, 45, 46, 47, 48, 51, 52, 53, 54), each bend having a bend radius $R_i$;

said at least one feature line (20) is located within 200 mm from an edge (2) of the roof (300); and

wherein the smallest bend radius $R_f$ of said at least one feature line (20) is less than 25 mm.

Fig. 2a

EP 4 269 086 A1

Fig. 5

(52) Cooperative Patent Classification (CPC): (Cont.)
**B32B 27/22; B32B 27/30; B32B 27/306;**
**B32B 27/40; B60J 1/008; B62D 25/06;**
**B62D 29/043; C03B 23/0235;** B32B 2307/4023;
B32B 2307/4026; B32B 2307/41; B32B 2307/414;
B32B 2307/732; B32B 2605/08

## Description

## FIELD OF THE INVENTION

The present invention falls in the field of automotive laminated glazing and relates to a roof comprising a laminated glazing that optimizes collision performance and enhances safety in the event of a collision.

## PRIOR ART

As automotive manufacturers work to design vehicles that are compliant with government regulatory requirements for efficiency and emissions as well as to meet consumer demand for environmentally friendly products, weight reduction has been a key strategy.

One of the methods widely employed to reduce weight has been to increase the glazed area of the vehicle, displacing heavier materials with glass and plastic. Another trend has been towards reducing the overall size and weight of the vehicle. Unfortunately, the reduction in the cabin volume can lead to an undesirable, cramped, and claustrophobic feel. Increasing the glazed area, in addition to reducing weight, helps to offset this effect by giving the passengers a wider field of view and admitting more natural light.

In this respect, roof glazing is highly effective. Once limited to an area immediately above the front seat, roof glazing have been getting larger and larger and currently there are roof glazing that comprise a substantial portion of the vehicle roof. These large glazing are known as panoramic roofs.

One of the major challenges of designing roof glazing in general, and even more so with the large panoramic ones, is collision safety. If tempered glass is used, in the event of a collision or impact, the entire glazing may fail, breaking into small beads of glass. This leaves the opening formerly covered by the glazing uncovered and the passengers unprotected. This is especially a concern in a roll-over accident where serious injury or death often occurs when a passenger of the vehicle is thrown from the vehicle, or some portion of the body protrudes through the opening.

To address this issue, at least partially, laminated safety glazing is often used for roof glazing. Laminated safety glazing is made by bonding two sheets of annealed glass together with a transparent thermoplastic interlayer. The annealed glass does not break into small beads as tempered glass does but rather breaks into large shards. Also, laminated glazing is held together by the plastic interlayer when it breaks. Damage may be thus limited to only a portion of the glazing. The broken pieces, held together by the plastic interlayer, tend to fit together like the pieces of a jig saw puzzle, retaining some degree of structural integrity. The glazing, even if badly shattered, is held in place over the opening in the vehicle body by the frame or flange that the glazing is bonded to, and some degree of protection remains.

However, if significant deformation of the mounting frame or flange occurs, as may be the case in the event of a roll-over or severe side impact, the glazing may buckle, and the glass surface may be displaced. Even though the glass shards will still adhere to the plastic interlayer, the edges of the broken glass are very sharp and can inflict serious injury. It is highly undesirable for the glazing to encroach upon the passenger compartment.

Due to the presence of randomly located surface defects that act as stress concentrators in roof glazing, two laminated glazing will not break in the same identical way even when holding all variables constant. Two identical vehicles, subject to the same conditions and collision test, may have radically different crash test results with the roof glazing buckling inboard in one test and outboard in another.

As the vehicle glazing is often a structural component, bonded to the vehicle with an adhesive such as high modulus urethane, and has considerable stiffness, the unpredictable nature of its failure also complicates the design of the structures that it is attached to. The mounting structure that the roof glazing is bonded to is one such structure.

The only means available to prevent the roof glazing from encroaching upon the passenger compartment when it fails, is to add additional metal reinforcements. Crumple zone design principles need to be used to design the reinforcements so that the glazing will not be displaced inboard.

It would be highly desirable to find a roof that would allow a laminated glazing to fail in a predictable manner in the event of a vehicle accident without the added cost and weight of reinforcements.

## DESCRIPTION OF THE INVENTION

The present invention provides a solution for the above mentioned issues by a roof for a vehicle according to independent claim 1, a vehicle according to claim 10 and the use of feature line on a roof according to independent claim 12. In dependent claims, preferred embodiments of the invention are defined.

The present disclosure can be understood more readily by reference to the detailed descriptions, drawings, examples, and claims. However, before the present compositions, articles, devices, and methods are disclosed and described, it is to be understood that this disclosure is not limited to the specific compositions, articles, devices, and methods disclosed unless otherwise specified and as such can of course, vary. It is also to be understood that the terminology used herein is for the purpose of describing aspects only and is not intended to be limiting.

In a first inventive aspect, the present invention provides a roof for a vehicle having a safety cage, the roof comprising a laminated glazing having a length $L_g$, the laminated glazing comprising:

at least two glass layers; and

at least one plastic layer for permanently bonding the at least two glass layers together;

wherein the at least two glass layers comprise at least one feature line, the feature line having a cross section having at least two bends, each bend having a bend radius ($R_i$);

said at least one feature line is located within 200 mm from an edge of the roof; and

wherein the smallest bend radius of said at least one feature line is less than 25 mm.

The following terminology is used to describe features of the invention.

"Inboard" and "outboard" are relative to the center of the glazing with inboard being the direction from the edge of the glazing towards the center and outboard from the edge of glass in the direction away from the center of the glazing.

The meaning of "layer", as used in this context, shall include the common definition of the word: a sheet, quantity, or thickness, of material, typically of some homogeneous substance.

A "layer" may further be comprised of multiple layers as in the case of a multi-layer coating such as a solar coating. When multiple layers together provide a common function, the multiple layers may be referred to as a layer even if the multiple layers included in the layer are not adjacent to each other. An example would be a solar protection layer comprising: a solar absorbing glass applied inside the glass layer and a solar reflecting coating applied to the outer glass layer.

While the shape of the glass surface is normally discussed in terms of the radius of curvature of a given portion, automotive glazing, especially windshields and panoramic roofs, tend to have complex curvature. Along a cross section, curvature is expressed as the radius of the smallest circle that can be fit to any set of three points along the curve or bend.

Each curve or bend will have a concave side and a convex side. The concave side is the one with the smallest radius. The convex radius will be equal to the concave radius plus the glass thickness.

The term "glass" can be applied to many organic and inorganic materials, including many that are not transparent. From a scientific standpoint, "glass" is defined as a state of matter comprising a non-crystalline amorphous solid that lacks the ordered molecular structure of true solids. Glasses have the mechanical rigidity of crystals with the random structure of liquids.

A "glazing" is a product comprised of at least one layer of a transparent material which serves to provide for the transmission of light and/or to provide for viewing of the side opposite the viewer and which is mounted in an opening in a building, vehicle, wall or roof or other framing member or enclosure. Preferably, the "glazing" comprises two layers and a plastic bonding layer which has the primary function of bonding the major faces of adjacent layers to each other. Also, preferably, the material selected for the plastic bonding layer is typically a clear thermoset plastic.

"Laminates", in general, are products comprised of multiple sheets of thin, relative to their length and width, material, with each thin sheet having two oppositely disposed major faces and typically of relatively uniform thickness, which are permanently bonded to one and other across at least one major face of each sheet.

Also, the term "feature line" refers to a specific type of feature found on a roof glazing comprising a complex sharply curved portion of said glazing. A feature line may be provided by modifying at least one glass surface by means of the addition of localized heating delivered by a heating means such as heat concentrators or reflectors in a furnace or laser heating during the bending process of said glass. The softened glass is bent to a small radius along some length forming features in the surface. The sharply curved portion provided by the feature line is obtained by locally heating the glass to a temperature sufficiently high enough to allow the small radii to bend.

Methods for producing such feature lines are known and disclosed in references WO2019/130283A1, WO2019/130284A1, WO2020/254991A1; incorporated here by reference in their entirety. Such methods make it possible to economically produce, in series production, automotive glazing that has complex small radii feature lines.

The invention provides a roof comprising an automotive laminated glazing, having a length $L_g$, on which at least one feature line has a cross section having at least two bends, namely a first bent portion described by a first bend radius and a second bent portion described by a second bend radius. The point where the radii of the first and second bent portions change their orientation generates an inflection point. If the first and second bent portions are separated by a distance, two inflection points are generated. In some embodiments, the radius of curvature of the first and second bent portions is of less than 150 mm.

Additionally, the smallest bend radius of the at least one feature line is less than 25 mm. Advantageously, having the smallest bend radius of the at least one feature line being less than 25 mm provides to the glazing roof of the invention the ability to orientate the stress applied to said roof towards the smallest bend radius in the event of an accident.

Advantageously, the feature line of the present first inventive aspect functions as a mechanical fuse, decoupling the load deforming the glazing from the remainder of the glazing, such that breakage of the laminated glazing is controlled, repeatable and predictable. By adding at least one feature line according to the first inventive aspect of the invention, the roof comprising the laminated glazing provides a way of predicting collision behavior of said laminated glazing.

In the event of an accident, a laminated glazing may be subjected to much higher stress than it was designed to withstand and, therefore, breaks. The first aspect of the invention makes use of feature lines which act as stress risers, to allow the glazing to fracture in a consistent and predictable manner.

When a force is applied to the laminated glazing, the geometric discontinuity of the feature line acts as a stress riser and concentrates said stress. One side of the glass will go into compression and the opposite side will go into tension. While glass is extraordinarily strong in compression, it is very weak in tension. In the event of a roll-over or severe side-impact, the level of stress generated in the laminated glazing, and thus on the roof, will exceed the level corresponding to a 100% probability of breakage in micro-seconds. The stress riser will break first as the stress will tend to far exceed the level resulting in a near 100% probability before the other areas of the glazing break.

A secondary technical effect of the invention is that the at least one feature line of the laminated glazing of the roof of the present invention increases stiffness of the whole laminated glazing and reduces the necessity of adding additional components to reinforce said laminated glazing.

Additionally, the present invention increases safety for the users that are located inside a vehicle in the event of an accident, presents improved collision test results and improved roof crush test results.

By providing the at least one feature line at a location within 200 mm of an edge of the roof, in the event of severe impact once the roof is assembled in a vehicle, if the glazing breaks along the feature line, the risk of intrusion of broken glass in the cabin passenger region of the vehicle is reduced.

Optionally, the glass layers are annealed or strengthened. There are two processes that can be used to increase the strength of glass: thermal strengthening, in which the hot glass is rapidly cooled (quenched), and chemical tempering which achieves the same effect through an ion exchange chemical treatment.

In an embodiment, the glass layers are annealed. Annealed glass is glass that has been slowly cooled from the bending temperature down through the glass transition range. This process relieves any stress left in the glass from the bending process. Annealed glass breaks into large shards with sharp edges. When a laminated glazing breaks, the shards of broken glass are held together, much like the pieces of a jigsaw puzzle, by the plastic layer helping to maintain the structural integrity of the glass. A vehicle with a broken windshield can still be operated. The plastic bonding layer also helps to prevent penetration by objects striking the laminate from the exterior and in the event of a crash occupant retention is improved.

In another embodiment, the glass layers are strengthened thermally or chemically. In the chemical strengthening, also known as chemical tempering process, ions in and near the outside surface of the glass are exchanged with ions that are larger. This places the outer layer of the laminated glazing in compression. Compressive strengths of up to 1,000 MPa are possible. The typical methods involve submerging the glass in a tank of molten salt where the ion exchange takes place. The glass surface must not have any paint or coatings that will interfere with the ion exchange process.

In an embodiment, the glazing comprises more than one feature line.

In an embodiment, the glazing comprises two feature lines, said feature lines comprising a smallest bend radius which is less than 25mm.

In a particular embodiment, the at least one feature line has at least two values of bend radii; wherein the bend radii fulfil:

$$R_f \leq (R_j - \tau)/1.1$$

wherein $R_f$ denotes the smallest bend radius, $R_j$ denotes the other bend radii, and $\tau$ is the thickness of the laminated glazing.

With the condition of the present particular embodiment, if the concave or convex radius of the smallest bend $R_f$ is placed in tension, the level will be substantially higher than that of the other bends $R_j$ of the feature line regardless of which sides of the bends are in tension.

Surprisingly, it has been found that feature lines having a cross section comprising at least two bends with the specified relationship between bend radii optimize and enhance the function as a mechanical fuse, which also helps in decoupling segments of the glazing under high load.

The cross section of each feature line comprises "n" bends, wherein n is a natural number equal to or greater than 2, and each bend i has a radius called $R_i$ ($i$ = 1, n). Radius $R_i$ is the best fit radius of the surface on the convex side of bend $i$. The radius on the convex side of the curve or bend minus the thickness $\tau$ is the radius on the concave side of the curve or bend of the laminated glazing.

A cross section of the feature line comprises at least two bends of radii $R_1$, $R_2$...$R_n$. One of the radii is selected as the fracture line $R_f$. The bend radius of the fracture line $R_f$ is selected such that, under load, the stress along the desired fracture line radius, $R_f$, will be higher than along the other bend radii, such that the probability of fracture along the fracture line will be near 100% while the probability of fracture along the other bend radii will be substantially lower. Once the initial surface fracture occurs, the fracture will propagate along the fracture line radius $R_f$.

The actual cross section of a feature line may be at least partially comprised of, and is more likely to be a complex curve or bend defined by a form of quadratic equation, such as a cubic spline or a b-spline, rather than segments which are true arcs. An arc is a portion of a circle. The curve or bend is defined herein in terms of the best fit radius of each section.

Additionally, each best fit radius has two values, one on each side of the glass. The convex side of the radii is larger than the concave side and the concave side is the radius of the convex side minus the glass thickness. As an example, if $R_1$ = 12 mm is the radius of the convex side and the glass thickness is 6 mm, the radius on the opposite side (i.e. the concave side) of the glass equals 6 mm.

When the glazing of the roof is placed under stress, one side of the bend, at any given point, is in tension if the opposite side is in compression. So, looking at any set of two bends, with each having just two possible states, there are only four possible states to have for the two bends combined. In every feature line state, one bend is selected to be the bend to fracture first in order to predict the breakage of the laminated glazing in the most accurate manner. Said bend selected to fracture first is also called fracture line and its radius is referred to *as $R_f$*

The worst case is the state when the convex side of the radius selected as fracture line $R_f$ is in tension and the convex side of the radius $R_j$ is in compression which implies that the concave side of $R_j$ is in tension. For predictable breakage, with the radii sorted in increasing order, $R_1$ must be significantly smaller than $R_2 - \tau$. Thus, a safety factor $F$ is applied, such that the bend radii fulfil:

$$R_1 \leq (R_2 - \tau)/1.1$$

In the present embodiment, the minimum value of the safety factor $F$ is 1.1. However, and preferably, higher factors are desirable in order to ensure the correct prediction of the breakage.

Glass is generally very strong in compression and very weak in tension. When placed in stress, glass will always fail in the areas in tension.

Given a feature line cross section comprising n bends, the fracture line $R_f$ is selected such that, if the concave or convex surface of the bend is placed in tension, the tension level will be substantially higher than the one of the other bends of the feature line regardless of which sides of bends are in tension. The relationship between radii can be expressed as:

$$F * R_f \leq (R_2 - \tau)$$

wherein:

$R_f$ = min($R_1$,$R_2$, ..., $R_n$) = $R_1$ in the present example

F is the safety factor

$\tau$ is the thickness of the glazing.

As the radius approaches zero, the stress concentration approaches infinity. Preferably, the radius of the bend selected as fracture line is as small as possible. A smaller radius will have a higher probability of fracture than a larger one and will fracture at a lower level of applied stress and faster.

Additionally, the radii are preferably selected such that the glazing breaks in micro-seconds as the edge of the laminated glazing just begins to be displaced from the deformation of the surface that the glazing is mounted to. Again, preferably, the radius is as small as possible. Even with a very small radius, the glazing will be able to withstand the normal loading from wind load, door slams, thermal expansion, and contraction, etc., that it will encounter.

In a particular embodiment, the smallest bend radius of the at least one feature line is less than 20 mm.

The smaller the radius is generally the better as the stress is further concentrated increasing the probability of breaking while reducing the duration that the glass will remain unbroken.

In another particular embodiment, the smallest bend radius of the at least one feature line is less than 15 mm.

In another particular embodiment, the smallest bend radius of the at least one feature line is less than 10 mm.

In another particular embodiment, the smallest bend radius of the at least one feature line is less than 5 mm.

In a particular embodiment, the at least one feature line is positioned substantially parallel to an edge of the roof.

Advantageously, positioning the at least one feature line substantially parallel to an edge of the roof guides the breakage of the glazing towards the edge of the roof where the at least one feature line is located and minimizes the risk of intrusion of broken glass in the cabin passenger region of a vehicle.

In a particular embodiment, the at least one feature line has a length $L_f$ being less than the length $L_g$ of the laminated glazing.

In some embodiments, the feature line of the laminated glazing extends from one edge of the laminated glazing surface and progressively disappears along the surface of said laminated glazing. Also, it may start progressively somewhere on a portion of the laminated glazing surface and progressively disappear along another portion of said surface, or even extend from one edge to another opposite edge of the laminated glazing surface.

Advantageously, the at least one feature line extends along part of the laminated glazing in order to concentrate the breakage of said laminated glazing in the event of an accident.

In a particular embodiment, the smallest bend radius of the at least one feature line varies along the length $L_f$ of said at least one feature line.

In a second inventive aspect, the present invention provides a vehicle having a safety cage and a roof according to any of the preceding embodiments.

Overall, the present invention increases safety for the users that are located inside the vehicle in the event of an accident, presents improved collision test results and improved roof crush test results.

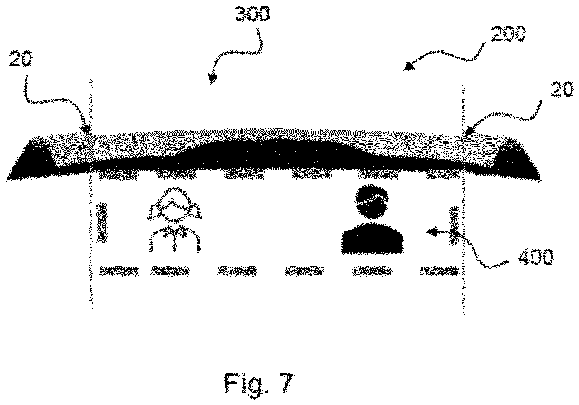

The safety cage of the vehicle is the strengthened area of a vehicle intended to protect the passengers in the event of an accident or car crash. The safety cage is also considered as the main structure of the vehicle to which the rest of components are mounted or attached. In the context of the present invention, the vehicle safety cage defining an inner volume of the vehicle safety cage, is named safety cage region which immediately encircles the passengers such as demonstrated in Figure 7.

In a particular embodiment of the second inventive aspect, the laminated glazing of the roof comprises a safety cage projected region in which said at least one feature line is not inscribed

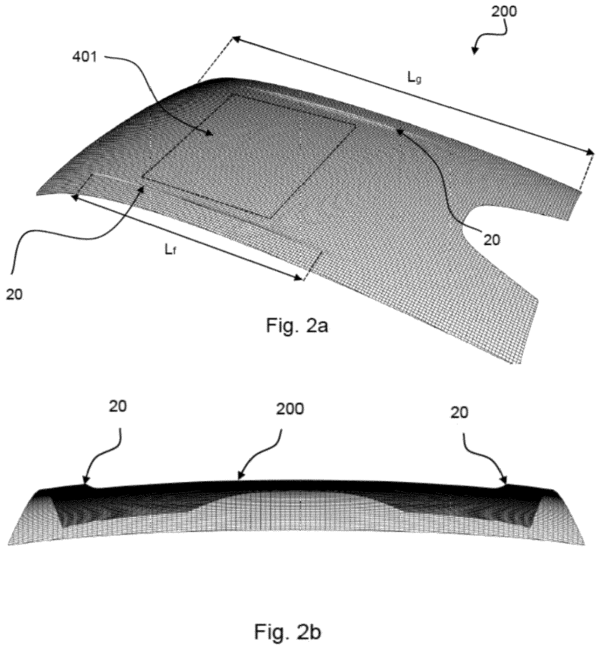

The region of the laminated glazing directly above the safety cage region of the vehicle is named safety cage projected region as shown in Figure 2a.

In some embodiments, the length of the feature line is substantially equal to the length of the laminated glazing safety cage projected region.

In a third inventive aspect, the present invention provides the use of at least one feature line on a roof for a vehicle as a mechanical fuse.

The use of at least one feature line functions as a mechanical fuse, decoupling the load deforming the glazing of the roof from the remainder of the glazing.

All the embodiments described above towards the first and second inventive aspects also apply to the third inventive aspect.

The invention thus improves collision performance of the roof comprising the glazing by making feature line portions that modify the geometry of the glazing and act as stress risers. Depending on the application type (e.g., moveable, or fixed), the glazing size (e.g., large, or small) and the glazing type (e.g., curved/flat, monolithic/laminated) some parameters can be adjusted to improve collision performance. These parameters include, but are not limited to, feature line geometry (size and section), arrangement of the feature line portion(s) over a glazing of a roof, thickness of layers in a laminated glazing and interlayer stiffness in a laminated glazing.

## DESCRIPTION OF THE DRAWINGS

These and other features and advantages of the invention will be seen more clearly from the following detailed description of preferred embodiments provided only by way of illustrative and non-limiting examples in reference to the attached drawings.

Figures 1a-c    These figures show different cross sections of an automotive laminated glazing of the state of the art.

Figures 2a-2b    These figures show different views of a panoramic roof comprising feature lines according to an embodiment of the invention.

Figure 3a    This figure shows a top view of a panoramic roof comprising a plurality of cross sections from A-A to H-H.

Figure 3b    This figure shows a cross sectional view of a feature line of a laminated glazing according to an embodiment of the invention.

Figures 4a-c    These figures show a view of a roof, a plurality of cross sectional views of said roof and a detailed view of one feature line from one cross sectional view. All figures are according to an embodiment of the invention.

Figure 5    This figure shows a detailed cross sectional view of an embodiment of one feature line according to the invention.

Figures 6a-6b    These figures show the results of a simulation performed on a panoramic laminated roof comprising feature lines according to an embodiment of the invention.

Figure 7    This figure shows a representation of the safety cage region of a vehicle according to an embodiment of the invention.

## DETAILED DESCRIPTION OF THE INVENTION

In the following, all the examples and embodiments further described correspond to a roof for a vehicle comprising a laminated glazing.

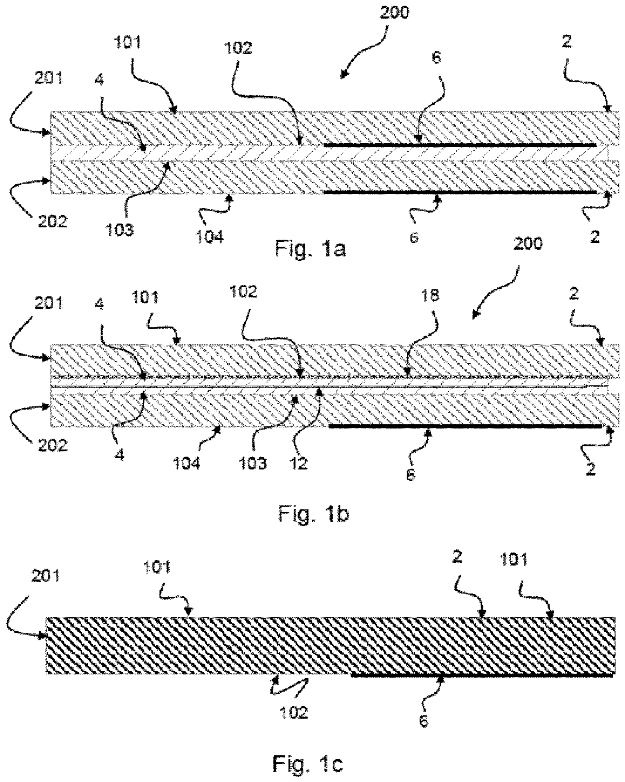

Figures 1a to 1c show a laminated glazing based on the known prior in the field of the present invention.

Typical automotive laminated glazing (200) cross sections are illustrated in Figures 1a and 1b. A laminated glazing (200) comprises at least two layers of glass (201, 202), namely an exterior or outer glass (201) and an interior or inner glass (202) that are permanently bonded together by a plastic layer (4) which is also called interlayer. Also, a typical automotive laminated glazing (200) is defined by its edge (2).

Unless otherwise stated none of the figures are drawn to scale.

In a laminated glazing (200), the glass surface intended to be on the exterior of the vehicle, i.e., the exterior surface of the outer glass (201), is referred to as surface one (101) or the number one surface. The opposite surface of the outer glass layer (201) is referred to as surface two (102) or the number two surface. The glass surface intended to be on the interior of the vehicle, i.e., the interior surface of the inner glass (202) is referred to as surface four (104) or the number four surface. The opposite surface of the inner layer of glass (202) is referred to as surface three (103) or the number three surface.

Surface two (102) and surface three (103) are bonded together by the plastic layer (4).

Additional glass layers (not represented on these figures) may be utilized as is often the case with ballistic resistant glazing in which case they shall be numbered sequentially from the outer glass layer inwards.

In the case of a laminated glazing (200) with three glass layers, there is an innermost glass layer (not represented in this figure) having two opposite surfaces: surface five (not represented) facing the outer glass layer and surface six (also not represented) facing the interior of the vehicle.

As shown in Figure 1b, an obscuration (6) is applied to the glass. Obscurations are commonly comprised of black enamel frit printed on either the number two surface (102) or number four surface (104), or both, in the case of a conventional laminate.

In some embodiments, the laminated glazing (200) presents a coating (18) on one or more of its surfaces. The laminated glazing (200) may also comprise a film (12) laminated in between at least two plastic bonding layers (4), see Figure 1b.

Figure 1c shows a tempered automotive glazing cross section. Tempered glazing is typically comprised of a single layer of glass (201) which has been heat strengthened. The glass surface intended to be on the exterior of the vehicle is referred to as surface one (101) or the number one surface. The opposite face of glass layer (201) is surface two (102) or the number two surface. The number two surface (102) of a tempered glazing is on the interior of the vehicle. Also, in some embodiments, an obscuration (6) is also applied to the glass on the number two surface (102). Also in some embodiments, the glazing presents a coating (not shown) on the number one surface (101) and /or one the number two surface (102).

Laminated safety glass is made by bonding at least two sheets (201, 202) of annealed glass together using a plastic bonding layer (4) comprised of a thin sheet of transparent plastic bonding layer (4), as shown in Figure 1a and 1b.

The plastic bonding layer (4) has the primary function of bonding the major faces of adjacent layers to each other. The material selected for the plastic bonding layer (4) is typically a clear thermoset plastic.

For automotive use, the most used plastic bonding layer (4) is polyvinyl butyral (PVB). PVB has excellent adhesion to glass and is optically clear once laminated. It is produced by the reaction between polyvinyl alcohol and n-butyraldehyde. PVB is clear and has high adhesion to glass. However, PVB by itself, is too brittle. Plasticizers must be added to make the material flexible and to give it the ability to dissipate energy over a wide range over the temperature range required for a vehicle. Only a small number of plasticizers are used. They are typically linear dicarboxylic esters. Two in common use are di-n-hexyl adipate and tetra-ethylene glycol di-n-heptanoate. A typical automotive PVB interlayer is comprised of 30-40% plasticizer by weight.

In addition to polyvinyl butyl, ionoplast polymers, ethylene vinyl acetate (EVA), cast in place (CIP), liquid resin and thermoplastic polyurethane (TPU) can also be used. Automotive interlayers are made by an extrusion process which has a thickness tolerance and process variation. As a smooth surface tends to stick to the glass, making it difficult to position on the glass and to trap air, to facilitate the handling of the plastic sheet and the removal or air (de-airing) from the laminated glazing (200), the surface of the plastic bonding layer (4) is normally embossed contributing additional variation to the sheet. Standard thicknesses for automotive PVB interlayer are comprised between 0.38 mm and 0.76 mm.

Figures 2a and 2b show an embodiment of a laminated glazing (200) comprising two feature lines (20) and the safety cage projected region (401).

Preferably, the laminated glazing (200) of Figures 2 to 6 is a glazing having two glass layers (201, 202). However, in order to ease the understanding of the Figures and to enhance clarity, the figures only show one of the two glass layers (201, 202).

In the particular embodiment of Figures 2a and 2b, the feature line (20) is formed in both glass layers.

In some preferred embodiments, the outer glass layer is clear 2.6 mm, soda-lime, glass and the inner glass layer is 2.3 mm, solar grey soda-lime glass. Also, a black obscuration is screen printed on both glass layers (201, 202). The proprietary process disclosed in the reference documents is used to form feature lines (20) in both the inner and outer glass layers (201, 202). A single layer of dark grey 0.76 mm thick PVB interlayer is used in an embodiment, giving the laminate a total thickness, $\tau$, of 5.66 mm.

In the particular embodiment of Figure 2a and 2b, the two feature lines (20) are approximately one meter in length each and located 100 mm inboard from the edge of the laminated glazing.

Particularly, the feature lines (20) have a length $L_f$ being less than the length $L_g$ of the laminated glazing (200).

In some embodiments, and as shown in the present Figure 2a, the features lines (20) do no cross the area of the safety cage projected region (401) of the vehicle.

In some embodiments, the length $L_f$ of the feature line (20) is substantially equal to the length of the safety cage projected region (401) of the vehicle.

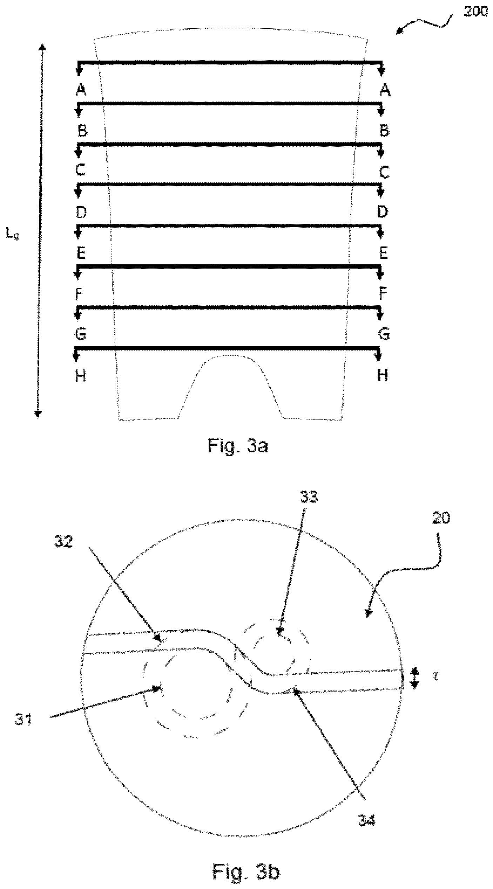

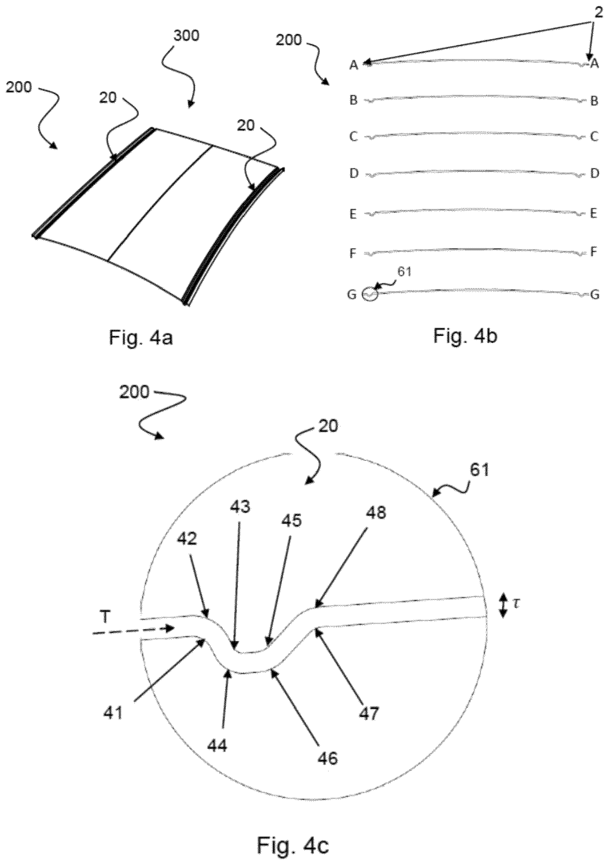

Figure 3a shows a top view of a panoramic roof (300) made of a laminated glazing (200) where, along the length $L_g$ of the laminated glazing (200), a plurality of cross sections are performed from left to right of said laminated glazing (200). The plurality of cross sections, A-A to H-H, are ideally separated by 200 mm one from the other and permit generating a plurality of cross sections views (see Figure 4b) which allow to compare the evolution of a feature line (20) along the length $L_g$ of the laminated glazing (200).

Figure 3b shows a detailed cross sectional view of a feature line (20), wherein said feature line (20) comprises two bends. Generally speaking, along the cross section of a feature line (20), curvature or bend is expressed as the radius of the smallest circle that can be fit to any set of three points along the curve or bend. That is, in the particular embodiment of Figure 3b, the greatest circle (32) of the first bend is the expression of the curvature or bend radius $R_{32}$ of the first bend of the present embodiment of a feature line (20). Also, in the particular embodiment of Figure 3b, the greatest circle (34) of the second bend is the expression of the curvature or bend radius $R_{34}$ of the second bend of the present embodiment of a feature line (20).

Additionally, each curve or bend of a laminated glazing presents a concave side, defined by the smallest circle of each bend (31, 33) respectively, and a convex side, defined by the greatest circle of each bend (32, 34) respectively. The bend radii of the first and the second bends are the radii of both the greatest circle of each bend (32, 34) respectively which are the bend radii of the convex side. Correspondingly, the expression of the radii of the concave side of each bend, being the smallest circle of each bend (31, 33), is equal to the radius of each convex side $R_{32}$, $R_{34}$ plus the laminated glazing thickness $\tau$.

Figures 4a to 4c show respectively a roof (300) comprising a laminated glazing (200), a cross sectional view of the laminated glazing (200) and a detailed cross sectional view (61) of one feature line (20) of a particular embodiment of the present invention where the laminated glazing (200) for a vehicle comprises two feature lines (20).

Figure 4a depicts a top perspective view of a roof (300) for a vehicle comprising a laminated glazing (200), wherein said laminated glazing comprises two feature lines (20).

Figure 4b shows a plurality of cross sectional views of cross sections A-A to G-G performed along the laminated glazing (200) of Figure 4a following the procedure described in Figure 3a detailed description.

In the particular embodiment depicted in Figure 4b, the two feature lines (20) are located at the two edges (2) of the laminated glazing (200) and are substantially parallel to said edges (2) of the laminated glazing (200). One feature line (20) of the cross section G-G is circled in order to show a closer detailed view in Figure 4c.

In some other examples, not depicted in Figures 4a and 4b, the two feature lines (20) are located at the edges (2) of the laminated glazing (200) but are disappearing along the length of said laminated glazing, which results in having a plurality of cross sections from the cross section A-A to H-H not showing any feature line (20). More particularly, in these other examples, the feature line (20) of the laminated glazing (200) extends from one edge and progressively disappears along the surface of said laminated glazing (200). It may start progressively somewhere on a portion of the laminated glazing (200) surface and progressively disappears along another portion of said surface, or, as shown in Figure 4a, can even extend from one edge to another opposite edge of the laminated glazing (200) surface.

Figure 4c depicts a detailed view (61) of a feature line (20) from the cross section G-G of the laminated glazing (200) of the embodiment of the previously described Figure 4a and 4b.

In this particular embodiment, the feature line (20) presents four curves or bends. In the event of an accident, the tension and/or compression that is susceptible to be applied to the present feature line (20) is represented by the discontinued arrow showing the applied tension (T) on the feature line (20).

Taking as a reference said applied tension (T), the feature line (20) presents a first bend (41, 42), a second bend (43, 44), a third bend (45, 46) and a fourth bend (47, 48). Each bend is identified with two numerical references where the odd numerical reference of the two represents the concave side (41, 43, 45, 47) of each bend respectively and the even numerical reference of the two represents the convex side (42, 44, 46, 48) of each bend respectively.

Therefore, and as explained above in Figure 3b, each bend, the first bend (41, 42), the second bend (43, 44), the third bend (45, 46) and the fourth bend (47, 48) present a respective bend radius which is equal to the radius of the greatest circle, being the radius of the convex side (42, 44, 46, 48) of each bend. Thus, the first bend (41, 42) has a bend radius $R_{42}$, the second bend (43, 44) has a bend radius $R_{44}$, the third bend (45, 46) has a bend radius $R_{46}$ and the fourth bend (47, 48) has a bend radius $R_{48}$.

Additionally, the smallest bend radius of the four radii $R_{42}$, $R_{44}$, $R_{46}$, and $R_{48}$ is the radius selected as fracture line. Thus, in the particular embodiment depicted in Figure 4c, the following equation can be written $R_f = \min(R_{42}, R_{44}, R_{46}, R_{48})$. -

In this embodiment, the convex side (42, 44, 46, 48) of each bend is placed in tension while the opposite side, the concave side (41, 43, 45, 47) of each bend, is placed under compression. As previously discussed, glass has extremely high compressive strength; therefore, the edge of glass is forced inboard and the glass will flex. The stress will be concentrated along the feature lines (20). While the level of stress varies over a wide range due to the brittle nature of the glass implemented, the displacement will result in a level of tension that far exceeds anything that the glass can withstand.

Due to the smaller radius of the bend that presents the radius $R_f$, the corresponding bend of the whole feature line (20) will rupture first. The plastic interlayer and interlocking edges of the broken glass (not shown) will continue to transfer force across the laminated glazing (200) and fracture will appear extending from the concave side of the bend having the radius $R_f$ and towards the convex side. As the bend presenting the radius $R_f$ breaks, the rest of bends flex and tension increases along the whole feature line (20), and therefore, it continues fracturing in the rest of the bends until the totality of the bends (41, 42, 43, 44, 45, 46, 47, 48) fracture.

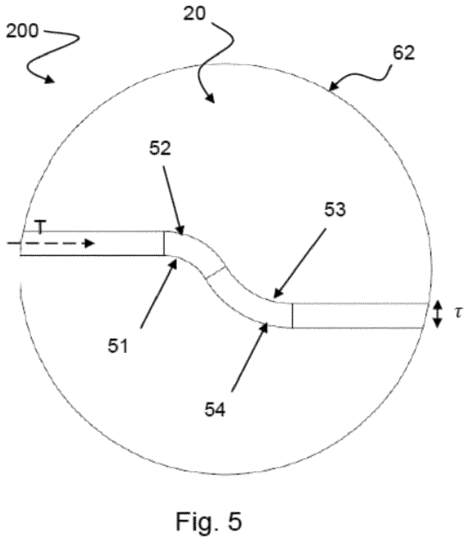

Figure 5 depicts a detailed view (62) of another embodiment of a feature line (20) from a cross section of the laminated glazing (200). In this particular embodiment, the feature line (20) presents two curves or bends. In the event of an accident, the tension and/or compression that is susceptible to be applied to the present feature line (20) is represented by the discontinued arrow showing the applied tension (T) on the feature line (20).

Taking as a reference said applied tension (T), the feature line (20) presents a first bend (51, 52), and a second bend (53, 54). As explained above, each bend is defined by two numerical references where the odd numerical reference represents the concave side (51, 53) of each bend respectively and the even numerical reference represents the convex side (52, 54) of each bend respectively.

Therefore, and as explained above in connection with Figure 3b, each bend, the first bend (51, 52) and the second bend (53, 54), presents a respective bend radius which is the radius of the greatest circle, i.e. the radius of the convex side of each bend (52, 54). Thus, the first bend (51, 52) has a bend radius $R_{52}$ and the second bend (53, 54) has a bend radius $R_{54}$.

Additionally, the smallest bend radius of the two radii $R_{52}$ and $R_{54}$ is the radius selected as fracture line. Thus, in the particular embodiment depicted in Figure 5, the following equation can be written $R_f = \min(R_{52}, R_{54})$.

In this particular embodiment of Figure 5, the convex side (52, 54) of each bend is placed in tension while the opposite side, the concave side (51, 53) of each bend is placed under compression. As previously discussed, glass has extremely high compressive strength and therefore the edge of the glass is forced inboard and the glass will flex. The stress will be concentrated along the feature lines (20).

Due to the smaller radius of the bend that present the radius $R_f$, the corresponding bend of the whole feature line (20) will rupture first. The plastic interlayer and interlocking edges of the broken glass (not shown) will continue to transfer force across the laminated glazing (200) and fracture will appear extending from the concave side of the bend having the radius $R_f$ until the convex side of said bend.

As the bend presenting the radius $R_f$ breaks, the rest of bends flexes and tension increases along the whole feature line (20), and therefore, it continues fracturing in the rest of the bends until the totality of the bends (51, 52, 53, 54) of the feature line (20) also fracture.

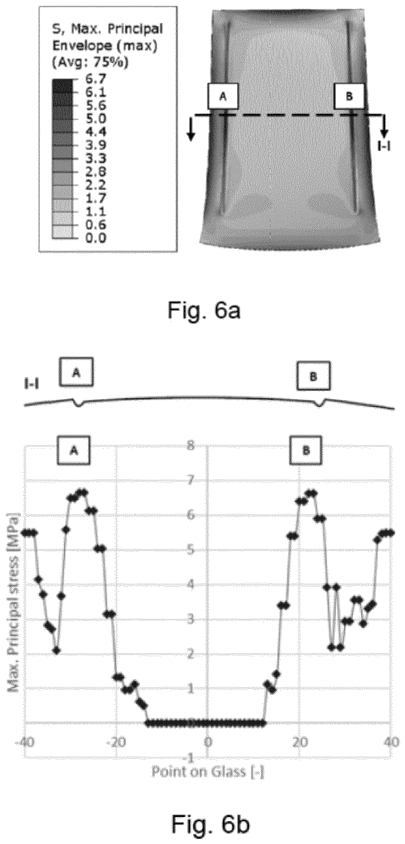

Finally, Figures 6a and 6b illustrate how a feature line can be used as a stress concentrator feature. Figure 6a shows the results of a simulation performed on a panoramic roof (300) comprising a laminated glazing having the feature lines (A, B) proposed by this invention, one on each major side of the laminate.

The simulation indicates that under a constant load, such as snow load, stresses are increased and accumulated closer to the feature line (A, B), represented by the darker colors, whereas in regions far away from the feature line, less stress is generated, which is represented by the lighter color.

A graph in Figure 6b shows the maximum principal stress calculated along 80 points in the cross section line I-I with the peak stress in points A and B at the feature lines. This simulation indicates that when a load such as a regulatory crush test load is applied near a feature line (20), said feature line (20) will concentrate stresses and will lead to a high probability of breakage near or more likely at the feature line (20).

Figure 7 depicts the safety cage (400) of a vehicle, where said safety cage (400) is represented as a rectangle with discontinued lines. The safety cage (400) is the area of a vehicle encircling the passengers and protecting said passengers in the event of an accident or car crash. In that particular embodiment, only the roof (300) of a vehicle is represented and said roof (300) comprises two feature lines (20). These feature lines (20) are located close to the edges of the laminated glazing (200).

According to the invention, the feature lines (20) are located on the edges of the laminated glazing (200) and, at the same time, on the outside of the safety cage region. Said configuration is represented in Figure 7 by a straight line crossing each feature line (20) which does not cross the rectangle being the representation of the volume of the safety cage (400) region.

Example of curve calculations

As an example, a feature line has three curves or bends in its cross section. Sorting from smallest to largest radius we obtain $R_1$ = 12 mm, $R_2$ = 16 mm and $R_3$ = 20 mm. The thickness $\tau$ of the glass is 6 mm. Therefore, $R_f = R_1$ = 12 mm, $R_2 - \tau$ = 16 - 6 = 10 mm and $R_3 - \tau$ = 20 - 6 = 14 mm.

Comparing $R_f$ to $R_2$, 12 < 16 but we need to consider the four possible loadings. Each side of each curve or bend can be in tension or compression where tension is a function of radius and increases as the radius decreases. The worst-case loading is one in which the larger convex side of the selected fracture line $R_f$ is in tension and the smaller concave side of $R_2$ is in tension. In this example, $R_f$ = 12 mm and $R_2 - \tau$ = 10 mm. Since 12 > 10, $R_2$ is likely to fracture before the fracture line $R_f$.

We can see that $R_2 - \tau$ must be greater than $R_f$. If we apply a safety factor of 10%, $R_2$ must be increased

to at least $R_2$ = (12 * 1.1) + $\tau$ = 19.2 mm. The same test must be made of all of the other radii less than 19.2 mm. In this example, $R_3$ is 20 mm and thus does not need to be changed. We also have the option of decreasing the selected fracture line $R_f$ to

$$R_f = \frac{12}{1.1} = 10.9 \; mm$$

.

In another example, for a 5 mm thick laminated glazing, $R_f$ = 25 mm.

Therefore: $R_2$ = (25 * 1.1) * 5 = 32.5 mm $R_2$ - $\tau$ = (32.5 - 5) = 27.5 mm, which means that $R_2$ - $\tau$ is 10% greater than $R_f$.

If the convex side of $R_f$ and the concave side of $R_2$ are both in tension, which would be the worst case, $R_f$ will have the higher probability of failing.

If loading results to be applied in the opposite curve or bend, $R_2$ at 32.5 mm is 1.625 greater than $R_f$ - $\tau$ = 20 mm and $R_f$ will fail first.

By performing the calculations above, the laminated glazing of the present invention comprising at least on feature line provides all the characteristics of a mechanical fuse and predict the failure and breakage zones in a laminated glazing in the event of an accident.

## Claims

1. A roof (300) for a vehicle having a safety cage (400), the roof (300) comprising a laminated glazing (200) having a length $L_g$, the laminated glazing (200) comprising:

   at least two glass layers (201, 202); and
   at least one plastic layer (4) for permanently bonding the at least two glass layers (201, 202) together;
   wherein the at least two glass layers (201, 202) comprise at least one feature line (20), the feature line (20) having a cross section having at least two bends (41, 42, 43, 44, 45, 46, 47, 48, 51, 52, 53, 54), each bend having a bend radius $R_j$;
   said at least one feature line (20) is located within 200 mm from an edge (2) of the roof (300); and
   wherein the smallest bend radius $R_f$ of said at least one feature line (20) is less than 25 mm.

2. The roof (300) according to claim 1, wherein the at least one feature line (20) has at least two values of bend radii $R_j$; wherein the bend radii fulfil:

$$R_f \leq (R_j - \tau)/1.1$$

   wherein $R_f$ denotes the smallest bend radius, $R_j$ denotes the other bend radii, and $\tau$ is the thickness of the laminated glazing (200).

3. The roof (300) according to any of the preceding claims, wherein the smallest bend radius ($R_f$) of the at least one feature line (20) is less than 20 mm.

4. The roof (300) according to any of the preceding claims wherein the smallest bend radius ($R_f$) of the at least one feature line (20) is less than 15 mm.

5. The roof (300) according to any of the preceding claims, wherein the smallest bend radius ($R_f$) of the at least one feature line (20) is less than 10 mm.

6. The roof (300) according to any of the preceding claims, wherein the smallest bend radius ($R_f$) of the at least one feature line (20) is less than 5 mm.

7. The roof (300) according to any of the preceding claims, wherein the at least one feature line (20) is positioned substantially parallel to an edge (2) of the roof.

8. The roof (300) according to any of the preceding claims, wherein the at least one feature line (20) has a length $L_f$ being less than the length $L_g$ of the laminated glazing (200).

9. The roof (300) according to any of the preceding claims, wherein the smallest bend radius $R_f$ of the at least one feature line (20) varies along the length $L_f$ of said at least one feature line (20).

10. A vehicle having a safety cage and a roof (300) according to any of preceding claims 1 to 9.

11. A vehicle according to claim 10 wherein the laminated glazing (200) of the roof (300) comprises a safety cage projected region (401) in which said at least one feature line (20) is not inscribed in.

12. Use of at least one feature line (20) on a roof (300) for a vehicle as a mechanical fuse.

Fig. 1a

Fig. 1b

Fig. 1c

Fig. 2a

Fig. 2b

Fig. 3a

Fig. 3b

Fig. 4a

Fig. 4b

Fig. 4c

Fig. 5

Fig. 6a

Fig. 6b

Fig. 7

Europäisches
Patentamt

European
Patent Office

Office européen
des brevets

# EUROPEAN SEARCH REPORT

Application Number

EP 22 17 0907

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 103 33 605 A1 (DAIMLER CHRYSLER AG [DE]) 17 February 2005 (2005-02-17) * figure 2; paragraphs 13, 24 * | 12 | INV. B32B1/00 B32B17/10 B62D25/00 |
| X | CN 204 055 262 U (YANG LEI) 31 December 2014 (2014-12-31) * figures 1, 3-5 * | 12 | B32B3/02 B60J1/00 B61D19/02 |
| X | US 4 157 254 A (REESE THOMAS J [US] ET AL) 5 June 1979 (1979-06-05) * figure 1 * | 12 | |
| A,D | WO 2020/254991 A1 (AGP AMERICA SA [PA]) 24 December 2020 (2020-12-24) * the whole document * | 1-11 | |
| A,D | WO 2019/130284 A1 (AGP AMERICA SA [PA]) 4 July 2019 (2019-07-04) * the whole document * | 1-11 | |
| A,D | WO 2019/130283 A1 (AGP AMERICA SA [PA]) 4 July 2019 (2019-07-04) * the whole document * | 1-11 | TECHNICAL FIELDS SEARCHED (IPC) B32B B62D |
| A | DE 20 2021 101147 U1 (SAINT GOBAIN SEKURIT DEUTSCHLAND GMBH & CO KG [DE]) 12 March 2021 (2021-03-12) * the whole document * | 1-11 | B61K B60J B61D |

The present search report has been drawn up for all claims

| Place of search | Date of completion of the search | Examiner |
|---|---|---|
| The Hague | 13 October 2022 | Barenbrug, Theo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 17 0907

This annex lists the patent family members relating to the patent documents cited in the above-mentioned European search report.
The members are as contained in the European Patent Office EDP file on
The European Patent Office is in no way liable for these particulars which are merely given for the purpose of information.

13-10-2022

| Patent document cited in search report | | Publication date | Patent family member(s) | | | Publication date |
|---|---|---|---|---|---|---|
| DE 10333605 | A1 | 17-02-2005 | AT | 337927 | T | 15-09-2006 |
| | | | DE | 10333605 | A1 | 17-02-2005 |
| | | | EP | 1500537 | A1 | 26-01-2005 |
| | | | ES | 2270237 | T3 | 01-04-2007 |
| CN 204055262 | U | 31-12-2014 | NONE | | | |
| US 4157254 | A | 05-06-1979 | CA | 1119805 | A | 16-03-1982 |
| | | | JP | S5527016 | B2 | 17-07-1980 |
| | | | JP | S54134725 | A | 19-10-1979 |
| | | | US | 4157254 | A | 05-06-1979 |
| WO 2020254991 | A1 | 24-12-2020 | CN | 114206609 | A | 18-03-2022 |
| | | | DE | 112020002902 | T5 | 24-02-2022 |
| | | | US | 2022305760 | A1 | 29-09-2022 |
| | | | WO | 2020254991 | A1 | 24-12-2020 |
| WO 2019130284 | A1 | 04-07-2019 | CN | 111566057 | A | 21-08-2020 |
| | | | CO | 2018002408 | A1 | 20-06-2018 |
| | | | DE | 112018006739 | T5 | 08-10-2020 |
| | | | US | 2020346524 | A1 | 05-11-2020 |
| | | | WO | 2019130284 | A1 | 04-07-2019 |
| WO 2019130283 | A1 | 04-07-2019 | CN | 111565948 | A | 21-08-2020 |
| | | | CO | 2018001897 | A1 | 31-05-2018 |
| | | | DE | 112018006741 | T5 | 08-10-2020 |
| | | | US | 2020346525 | A1 | 05-11-2020 |
| | | | WO | 2019130283 | A1 | 04-07-2019 |
| DE 202021101147 | U1 | 12-03-2021 | NONE | | | |

EPO FORM P0459

For more details about this annex : see Official Journal of the European Patent Office, No. 12/82

**EP 4 269 086 A1**

**Patent documents cited in the description**

- WO 2019130283 A1
- WO 2019130284 A1
- WO 2020254991 A1